# EUROPEAN PATENT SPECIFICATION

(11) **EP 1 713 412 B1**
(45) Date of publication and mention of the grant of the patent: **25.07.2018**
(21) Application number: 05704763.1
(22) Date of filing: 28.01.2005
(51) Int. Cl.: A61C 8/00

(54) **DENTAL IMPLANT ARRANGEMENT**
ZAHNIMPLANTAT-ANORDNUNG
DISPOSITIF D'IMPLANT DENTAIRE

(30) Priority: 29.01.2004 SE 0400157
(43) Date of publication of application: 25.10.2006
(73) Proprietor: Nobel Biocare Services AG, 8058 Zürich-Flughafen (CH)
(72) Inventor: ROMPEN, Eric, B-4000 Liège (BE); TOUATI, Bernard, F-75017 Paris (FR); VAN DOOREN, Eric, B-2000 Antwerpen (BE); DURIC, Sanel, S-414 80 Göteborg (SE)
(74) Representative: Capré, Didier
(86) International application number: PCT/SE2005/000095
(87) International publication number: WO 2005/072639

(56) References cited:
- WO-A1-02/45615
- DE-A1- 3 811 498
- FR-A1- 2 317 904
- US-A- 5 108 289
- US-A- 5 639 237
- US-A- 5 727 943
- US-A1- 2003 104 338

## Description

The present invention relates to a trans-mucosal component for a dental implant intended to support a prosthetic restoration. The implant is of the type which comprises a separate trans-mucosal component for passage through soft tissue, which component can be connected to the bone-anchoring element, or the so-called fixture, of the implant as a separate unit. The trans-mucosal component comprises a continuous recess for a screw used to secure the component and, possibly, the prosthetic installation to the bone-anchoring element of the implant. The trans-mucosal component is designed to cooperate with soft tissue, in this case the gum, and on its outside it has a part that can cooperate with the gum. A first portion of this part can cooperate with the epithelium of the gum, while a second portion cooperates with the connective tissue of the gum.
Trans-mucosal components such as abutments or spacer sleeves as such are already well known in the dental sector and can have one or more portions passing through the gum. In the case where the trans-mucosal component is a separate unit, it is designed to be connected to the bone-anchoring element via a spacer screw or the like. Reference is made to spacer sleeves which are available on the market and which are also described in a large number of different designs in the patent literature.
The total installation of the implant in the form of bone-anchoring element, trans-mucosal component and attached prosthetic installation is intended to form a dental unit which is well anchored in the jaw bone or gum. For example, it is not desirable for the jaw bone and/or the gum to degenerate or resorb and subside around the trans-mucosal component and the fixture and thus expose, for example, the lower portions of the trans-mucosal component to the soft tissue or the upper part of the fixture. This kind of exposure may cause accumulation of bacteria and gives a less attractive appearance. The object of the invention is to solve this problem by permitting an excellent and durable degree of integration between jaw bone/gum and adjoining portions of the trans-mucosal component or fixture. To avoid bone resorption and subsidence tendencies, the various parts must have extents in the vertical direction (height of the implant and of the trans-mucosal component) which satisfy conditions for epithelial contact and gum contact against the facing portions of the trans-mucosal component, specifically a certain natural, biological width of the adjoining soft tissue should be maintained. Such an object has hitherto been in conflict with the need for a low height of the trans-mucosal component. It is an object of the invention to solve this problem too.

US 2003/0104338 A1 discloses a modified dental implant fixture designed to preserve lingual bone by having the coronal aspect of the implant being compatible with bony anatomy. WO 02/45615 A1 discloses a dental implant which includes a fixture that is integral with an abutment. DE 3811498 A1 discloses a dental jaw implant with an abutment having a waist-shaped collar for contacting the gingiva. Further prior art can be found in FR 2 317 904 A1.
It is also expedient to achieve an effective coordination of the structures and functions of the trans-mucosal component and of the implant. Thus, for example, it is important to be able to adapt the trans- mucosal component from the point of view of height so that even low trans-mucosal components can now be obtained without risk of bone resorption and subsidence tendencies. There is therefore a need to be able to produce trans-mucosal components with a low height and at the same time satisfy said esthetic requirements. The invention solves this problem too.

The present invention is defined by the features of independent claim 1. Preferred optional features are recited in the dependent claims.

According to the invention the trans-mucosal component is provided with a waist-shaped or inwardly narrowed part for reducing the necessary height of the trans- mucosal component and creating a volume for generation of a stabilizing and retentive belt of soft tissue.

The main characterizing feature of the invention is that the distance in the longitudinal direction along the contact surface of said waist-shaped or narrowed part at least corresponds to the required width of the adjoining soft tissue.
The height reduction is chosen as a function of the size and strength of the remaining implant material in the area between the waist-shaped or inwardly narrowed part and a possible through recess in the implant body. The waist-shaped or inwardly narrowed part is located in its entirety on the trans-mucosal component. In one embodiment, one or both of first and second portions that cooperates with the soft tissue can be provided with an oxide layer, i.e. a titanium oxide layer, in the case where the trans-mucosal component is made of titanium. In a preferred embodiment, a first portion has a cone-shaped (or truncated cone shaped), curved or arcuate first part which can face the epithelium and which can have a length measurement or height measurement of ca. 1 mm. The second portion for cooperation with the connective tissue of the gum can have a curved or arcuate part with a height measurement which can lie in the range of 1.5 - 1.9 mm, and preferably is ca. 1.7 mm. At its widest cross-sectional area, the trans-mucosal component can have a first diameter of 3 - 6 mm and, at its waist-shaped or inwardly narrowed area, can have a second diameter of 2 - 5.5 mm. The lower, medium and higher values within both ranges are in this case set in relation to one another. The waist-shaped or inwardly narrowed part can have a mean depth of 0.2 - 1.5 mm, preferably 0.5 mm. Further embodiments of the novel arrangement are set out inter alia in the attached patent claims.
By means of what has been proposed above, it is possible to provide the necessary gum coverage against the trans-mucosal component or part of a one-piece implant despite the need for a low height of these parts, and without risk of subsidence or resorption. Thus, for example, gum coverages which satisfy the natural (biological) requirements for a certain longitudinal extent of the soft tissue adjoining the trans-mucosal component can be guaranteed without the trans-mucosal component having to have the same height. Instead, the trans-mucosal component is designed with an inwardly narrowed or waist-shaped part which increases the contact distance with the soft tissue compared with a straight longitudinal extent of the contact surface of the trans-mucosal component. The inwardly narrowed or waist-shaped part will have such a size that said contact surface distance at least corresponds to the biologically necessary width of the soft tissue.
Further measures for increasing integration can be used in combination with said inwardly narrowed or waist-shaped part, for example in the form of growth-stimulating titanium oxide layers, or grooves or depressions in the inwardly narrowed or waist-shaped part.

Some examples of the arrangement will be described below with reference to the attached drawings, in which:

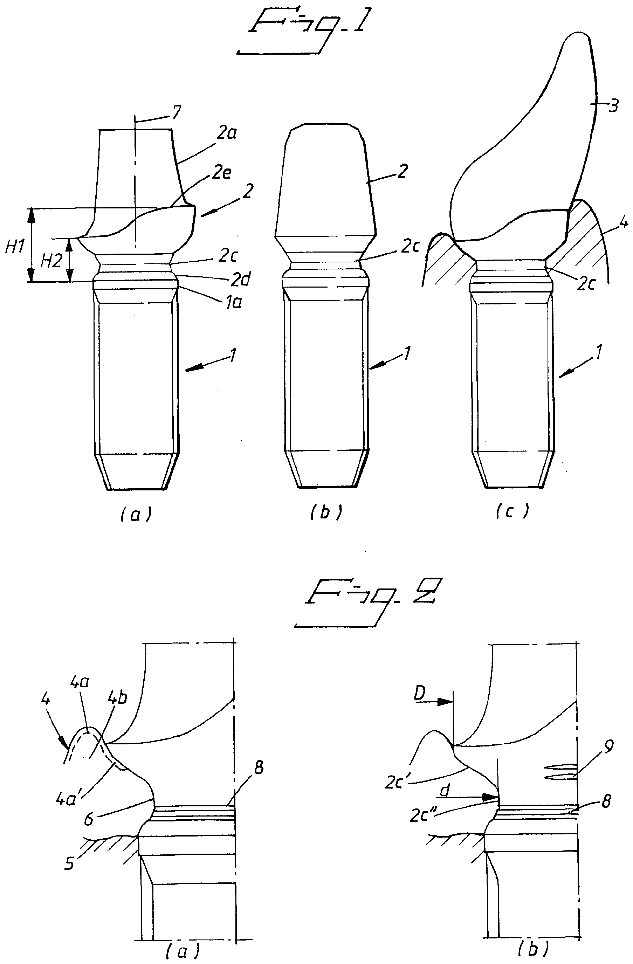

- Figure 1: is a vertical view showing an implant in the form of a bone-anchoring element and an associated trans-mucosal component in the form of a spacer sleeve (a), a one-piece implant (which is not part of the present invention) in the form of a bone-anchoring element and a spacer ptrans-mucosal component part integrated with the latter (b), and an implant with a prosthetic installation (c),

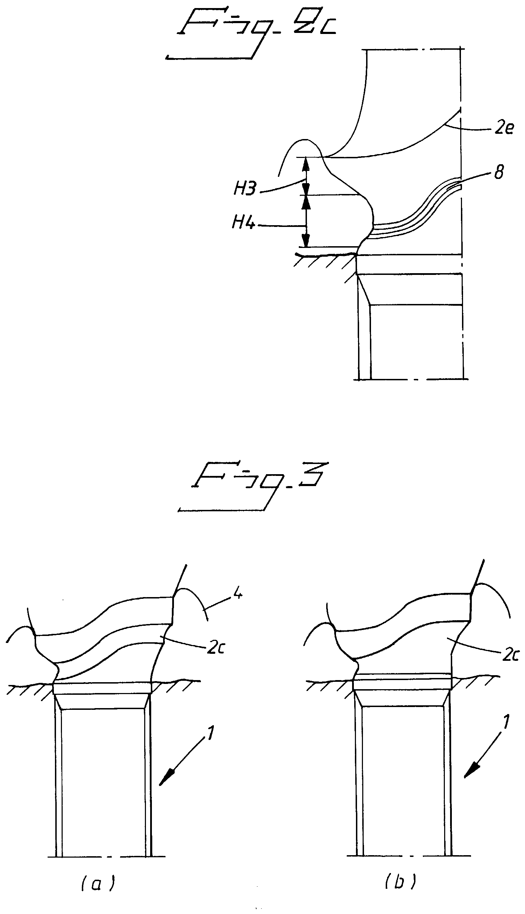

- Figure 2: is a vertical view, enlarged in relation to Figure 1, showing parts of the implant and the spacer sleeve with different designs of the waist-shaped or inwardly narrowed part, and
- Figure 3: is a vertical view, enlarged in relation to Figure 1, showing parts of the implant and the spacer sleeve where the waist-shaped or inwardly narrowed part of the spacer sleeve is located at a variable height around the spacer sleeve so that it substantially follows the topography of the surrounding gum.

In Figure 1, a bone-anchoring element, or so-called fixture, is indicated by 1. The fixture can be a fixture known per se and will therefore not be described in detail here. The fixture can be made of titanium and is provided with an upper flange 1a. A trans-mucosal component in the form of a spacer sleeve 2 is assigned to the fixture. The spacer sleeve is intended to support a prosthetic installation 3, which can be of a kind known per se. The spacer sleeve has an upper, narrowed part 2a. At the lower parts of the spacer sleeve, said spacer sleeve is provided with a waist-shaped or inwardly narrowed, in this case curved, part 2c. The part 2c is located between the upper, narrowed part 2a and a lower base portion 2d via which the spacer sleeve bears against the fixture, against the upper flange 1a thereof. The upper narrowed part 2a has a variable thickness around the periphery of the spacer and, at the thicker part, has a height H1 of in this case ca. 3.5 mm, calculated from the underside of the lower base portion 2d. At the thinner part, the upper part 2a has a height H2 of in this case ca. 2 mm, calculated from the underside of the base portion 2d. The upper part 2a thus has a curved top surface 2e which, when the implant and spacer sleeve are in the implanted state in the jaw bone, can follow the top face or outside of the gum or soft tissue at the installation. The waist-shaped or inwardly curved part 2c can lie in a plane at right angles to the longitudinal extent of the implant, as is shown in Figure 1, but can also be designed so that it follows a curved top surface 2e, or shoulder, of the spacer, as is shown in Figure 3 below. The spacer sleeve and the fixture can be provided with an internal recess which extends further down in the inside of the fixture 1 and is provided for a fastening screw (not shown) which is intended to hold the fixture, spacer sleeve and, if appropriate, the prosthetic installation together.
The waist-shaped or inwardly narrowed part 2c can be located entirely on the outer surface of the transmucosal component or it can be located so that it is contigous with that part of the trans-mucosal component adjoining the bone anchoring part (1) of the dental implant. In the latter case the surface of the waist-shaped or inwardly narrowed part is then formed by a part of the trans-mucosal component and an annular upper, end surface of the fixture.
Figure 1b shows a one-piece implant in which the spacer 2 is integrated with the fixture 1. In this case too, the spacer part 2 of the one-piece implant comprises an inwardly curved or waist-shaped part 2c which is designed to cooperate with the surrounding soft tissue, i.e. the gum. This example is not part of the present invention. Figure 1c shows the implant together with a prosthetic restoration in the form of a crown 3. The gum level 4 has also been indicated in the figure.

Figure 2 shows a jaw bone 5 with associated soft tissue or gum 4. The soft tissue or gum consists of epithelium which is indicated by 4a and connective tissue 4b. The waist-shaped or inwardly curved part 2c has a first portion 2c', which in this illustrative embodiment is substantially cone-shaped or formed as a truncated cone. The part 2c also has a second portion 2c" which in this illustrative embodiment has a substantially semicircular vertical section (= the section according to Figure 2). The first portion 2c' has a height H3 of ca. 0.7 mm, and the second portion 2c" has a height H4 of in this case ca. 1 mm. The contact distance 4a' of the epithelium against the outer surface of the portion 2c' is of the order of 1 mm. The contact distance of the connective tissue against the second portion 2c" is of the order of 1.5 mm. The height reduction gain for the spacer in the abovementioned case lies within a range of 1 - 1.5 mm. Despite this, the epithelial contact has a distance of ca. 1 mm, and the connective tissue contact has a distance of ca. 1.7 mm, which means that the required width of the adjoining soft tissue is maintained and a reduced risk of resorption and subsidence tendencies in the jaw bone 5. A high degree of integration can be obtained between the epithelium 4a and the outer surface of the first portion, and between the connective tissue 4b and the surface of the second portion 2c". A good esthetic result can also be achieved and maintained in this way. In accordance with Figure 2, the lower base portion 2d (compare Figure 1) has a height of ca. 0.2 mm. The upper flange 1a (compare Figure 1) has a height of ca. 0.3 mm. In accordance with Figure 2, good integration is thus obtained between the connective tissue 4b and the outer surface of the second portion 2c". The waist-shaped or inwardly curved part thus forms a volume-creating space for the soft tissue, which stabilizes and maintains the soft tissue in the vertical direction. The size of the inwardly curved or waist-shaped part 2c is dependent, inter alia, on the remaining material of the implant body between the bottom portion 6 of the waist-shaped part and a possible internal recess in the spacer. The height reduction is calculated in relation to the case where the portions 2c' and 2c" would have outer surfaces which are straight or are parallel to the common longitudinal axis 7 of the spacer and of the implant. These straight or parallel outer surfaces would have a height substantially corresponding to the vertical or longitudinal extents of the portions 2c' and 2c". Said heights or lengths of the portions will thus be reduced by the heights H3 and H4 to establish the height reduction effect.

The outer surfaces of the portions 2c' and 2c" according to Figure 2 can be provided with a titanium oxide layer known per se. Figures 1 and 2 indicate a diameter D for the widest part of the spacer sleeve, and a diameter d for the inwardly curved part. The diameter D can assume values of between 3 and 6 mm, and the diameter d can assume values of between 2 and 5.5 mm. The depth D-d of the inward curve or waist-shaped part can be in the range of 0.2 - 1.5 mm. In one embodiment, said waist-shaped or inwardly curved part is also provided with grooves or depressions 8, 9 extending completely or partially round the periphery of said part 2c. Said grooves 8 can be located at the lower parts of the sleeve, for example immediately above said lower flange 2d, as is shown in Figure 2a. Figure 2b shows grooves 9 which extend only partially round the periphery and are located higher up on the sleeve. The grooves 8, 9 can have depths and widths which themselves permit ingrowth of soft tissue and thus increase the stability of the surrounding soft tissue, and they can for example have a width of ca. 100 mm and a depth of ca. 70 mm. In one embodiment, the waist-shaped part 2c itself extends round the whole periphery of the spacer sleeve, but the case can also arise in which the inwardly curved part or parts extend(s) only partially round the periphery, for example on those parts which adjoin the teeth upon complete installation of implant, spacer and prosthetic installation. At its upper parts, for example at the flange 1a, the fixture can be provided with a titanium oxide layer in the same way as the proposed layers of the first and second portions of the waist-shaped or inwardly curved part.

Figure 2c also shows examples where said grooves 8 curve and are substantially parallel to the curved shoulder 2e of the spacer for better adaptation to the topography of the surrounding jaw bone. The inwardly curved or waist-shaped part 2c itself can also have a curved, scalloped extent and follows the topography of the soft tissue as is shown in Figure 3. In Figure 3a, it has a substantially constant width round the spacer, whereas in Figure 3b it is shown with a varying width.

The invention is not limited to the embodiment described above by way of example, but defined by the scope of the attached patent claims.

## Claims

1. A trans-mucosal component for a dental implant intended to support a prosthetic restoration, said trans-mucosal component being designed for the purpose of improving the quality and stability of the biological adhesion of the junctional epithelium and of the connective tissue, wherein:
the trans-mucosal component (2) is provided with a waist-shaped or inwardly narrowed part (2c) for reducing the necessary height of the trans-mucosal component (2) and creating a volume for generation of a stabilizing and retentive belt of soft tissue,
the distance in the longitudinal direction along the contact surface of the waist-shaped or narrowed part (2c) at least corresponds to the required width of the adjoining soft tissue,
the component (2) is a separate member, which can be connected to a bone-anchoring part (1) of the dental implant, and comprises a continuous recess for a screw securing the component (2) to the bone anchoring part (1) of the dental implant,
the waist-shaped or inwardly narrowed part (2c) is located entirely on the outer surface of the trans-mucosal component (2) and between a lower base portion (2d) of the trans-mucosal component (2), via which the component is configured to bear against the dental implant, and an upper narrowed part (2a) of the trans-mucosal component (2), and
the waist-shaped or inwardly narrowed part has a mean depth of 0.2 - 1.5mm.

2. A trans-mucosal component according to claim 1 **characterized in that** the part of the outer surface of the component which is intended to cooperate with the soft tissue has a first portion (2c') intended to cooperate with the junctional epithelium (4a) of the soft tissue, and a second portion (2c") intended to cooperate with the connective tissue part (4b) of the soft tissue, said first and second portions extending along the waist-shaped or inwardly narrowed part (2c).

3. A trans-mucosal component according to claim 2, **characterized in that** one or both of the first and second portions (2c', 2c") is/are completely or partially provided with an oxide layer, e.g. a titanium oxide layer.

4. A trans-mucosal component according to claims 2 and 3, **characterized in that** one or both of the first and second portions (2c', 2c") is/are provided with grooves or depressions (8, 9) extending completely or partially around the periphery of the component.

5. A trans-mucosal component according to claims 1-4, **characterized in that** the waist-shaped or inwardly narrowed part (2c) is extending completely or partially around the periphery of the component.

6. A trans-mucosal component according to claims 1-5, **characterized in that** the second portion (2c") for cooperation with the connective tissue has a curved or arcuate part with a vertical length in the range of 1.5 -1.9 mm, for example, and preferably approximately 1.7 mm.

7. A trans-mucosal component according to claims 1-6, **characterized in that**, at its widest cross- sectional area, the component has a first diameter (D) of 3 - 6 mm, and, at its waist-shaped or inwardly narrowed part, it has a second diameter (d) of 2 - 5.5 mm, and the lower, medium and higher values of the diameters can be set in relation to one another.

8. A trans-mucosal component according to claims 1-7, **characterized in that** the waist-shaped or inwardly narrowed part (2c) has a substantially cone-shaped cross section at the first portion and a substantially semicircular vertical section at the second portion (2c").

9. A trans-mucosal component according to claims 1-7, **characterized in that** the integration between the connective tissue and the outer surface of the second portion and possibly all or part of the surface of the first portion increases as a result of the curved shape of the surface or surfaces in relation to straight outer surface shapes parallel to the longitudinal axis (7) of the component.

10. A trans-mucosal component according to claims 1-9, **characterized in that** the stability of the implant in the jaw bone (5a) and soft tissue (5b) increases as a result of the increased volume of connective tissue and in the waist-shaped or inwardly narrowed part.

11. A trans-mucosal component according to claim 1, **characterized in that** the waist-shaped or inwardly narrowed part (2c) is located in a plane which is substantially at right angles to the longitudinal axis (7) of the implant.

12. A trans-mucosal component according to claim 1, **characterized in that** the waist-shaped or inwardly narrowed part (2c) is located in a plane which is substantially parallel to the top surface of the soft tissue, i.e. follows the topography of the soft tissue.

13. A trans-mucosal component according to claim 1, **characterized in that** the waist-shaped or inwardly narrowed part (2c) has a substantially constant width around the periphery of the component.

14. A trans-mucosal component according to claim 1, **characterized in that** the waist-shaped or inwardly narrowed part (2c) has a varying width around the periphery of the component.

15. The trans-mucosal component according to claim 1, **characterized in that** the lower base portion (2d) is configured to bear against an upper flange (1a) of the dental implant.

## Patentansprüche

1. Transmukosale Komponente für ein Zahnimplantat, das eine prothetische Restauration unterstützen soll, wobei die transmukosale Komponente für den Zweck des Verbesserns der Qualität und Stabilität der biologischen Haftung des junktionalen Epithels und des Bindegewebes ausgelegt ist, wobei:
die transmukosale Komponente (2) mit einem taillierten oder nach innen verengten Teil (2c) zum Verringern der notwendigen Höhe der transmukosalen Komponente (2) und zum Erzeugen eines Volumens zum Generieren eines stabilisierenden und retentiven Bands aus weichem Gewebe versehen ist,
die Distanz in der Längsrichtung entlang der Kontaktfläche des taillenförmigen oder verengten Teils (2c) zumindest der notwendigen Breite des angrenzenden weichen Gewebes entspricht,
die Komponente (2) ein getrenntes Element ist, das mit einem Knochenverankerungsteil (1) des Zahnimplantats verbunden werden kann und eine durchgehende Aussparung für eine Schraube umfasst, die die Komponente (2) an dem Knochenverankerungsteil (1) des Zahnimplantats sichert,
der taillenförmige oder nach innen verengte Teil (2c) vollständig auf der Außenfläche der transmukosalen Komponente (2) und zwischen einem unteren Basisabschnitt (2d) der transmukosalen Komponente (2), über den die Komponente konfiguriert ist, gegen das Zahnimplantat zu drücken, und einem oberen verengten Teil (2a) der transmukosalen Komponente (2) liegt, und
der taillenförmige oder nach innen verengte Teil eine mittlere Tiefe von 0,2 - 1,5 mm aufweist.

2. Transmukosale Komponente nach Anspruch 1, **dadurch gekennzeichnet, dass** der Teil der Außenfläche der Komponente, der mit dem weichen Gewebe zusammenwirken soll, einen ersten Abschnitt (2c'), der mit dem junktionalen Epithel (4a) des weichen Gewebes zusammenwirken soll, und einen zweiten Abschnitt (2c"), der mit dem Bindegewebeteil (4b) des weichen Gewebes zusammenwirken soll, aufweist, wobei sich der erste und zweite Abschnitt entlang des taillenförmigen oder nach innen verengten Teils (2c) erstrecken.

3. Transmukosale Komponente nach Anspruch 2, **dadurch gekennzeichnet, dass** einer oder beide des ersten und zweiten Abschnitts (2c', 2c") vollständig oder teilweise mit einer Oxidschicht, z. B. einer Titanoxidschicht, versehen ist/sind.

4. Transmukosale Komponente nach Ansprüchen 2 und 3, **dadurch gekennzeichnet, dass** einer oder beide des ersten und zweiten Abschnitts (2c', 2c") mit Nuten oder Vertiefungen (8, 9) versehen ist/sind, die sich vollständig oder teilweise um den Umfang der Komponente erstrecken.

5. Transmukosale Komponente nach Ansprüchen 1-4, **dadurch gekennzeichnet, dass** sich der taillenförmige oder nach innen verengte Teil (2c) vollständig oder teilweise um den Umfang der Komponente erstreckt.

6. Transmukosale Komponente nach Ansprüchen 1-5, **dadurch gekennzeichnet, dass** der zweite Abschnitt (2c") zum Zusammenwirken mit dem Bindegewebe einen gekrümmten oder bogenförmigen Teil mit einer vertikalen Länge im Bereich von beispielsweise 1,5 - 1,9 mm und bevorzugt ungefähr 1,7 mm aufweist.

7. Transmukosale Komponente nach Ansprüchen 1-6, **dadurch gekennzeichnet, dass** die Komponente an ihrem breitesten Querschnittsbereich einen ersten Durchmesser (D) von 3 - 6 mm und an ihrem taillenförmigen oder nach innen verengten Teil einen zweiten Durchmesser (d) von 2 - 5,5 mm aufweist, und die unteren, mittleren und oberen Werte der Durchmesser in Bezug zueinander festgelegt werden können.

8. Transmukosale Komponente nach Ansprüchen 1-7, **dadurch gekennzeichnet, dass** der taillenförmige oder nach innen verengte Teil (2c) einen im Wesentlichen kegelförmigen Querschnitt am ersten Abschnitt und einen im Wesentlichen halbkreisförmigen Vertikalschnitt am zweiten Abschnitt (2c") aufweist.

9. Transmukosale Komponente nach Ansprüchen 1-7, **dadurch gekennzeichnet, dass** die Integration zwischen dem Bindegewebe und der Außenfläche des zweiten Abschnitts und möglicherweise der gesamten oder einem Teil der Fläche des ersten Abschnitts aufgrund der gekrümmten Form der Fläche oder Flächen in Bezug auf gerade Außenflächenformen parallel zu der Längsachse (7) der Komponente zunimmt.

10. Transmukosale Komponente nach Ansprüchen 1-9, **dadurch gekennzeichnet, dass** die Stabilität des Implantats in dem Kieferknochen (5a) und dem weichen Gewebe (5b) aufgrund des vergrößerten Volumens des Bindegewebes und in dem taillenförmigen oder nach innen verengten Teil zunimmt.

11. Transmukosale Komponente nach Anspruch 1, **dadurch gekennzeichnet, dass** der taillenförmige oder nach innen verengte Teil (2c) in einer Ebene liegt, die im Wesentlichen im rechten Winkel zu der Längsachse (7) des Implantats ist.

12. Transmukosale Komponente nach Anspruch 1, **dadurch gekennzeichnet, dass** der taillenförmige oder nach innen verengte Teil (2c) in einer Ebene liegt, die im Wesentlichen parallel zu der Oberfläche des weichen Gewebes ist, d. h. der Topographie des weichen Gewebes folgt.

13. Transmukosale Komponente nach Anspruch 1, **dadurch gekennzeichnet, dass** der taillenförmige oder nach innen verengte Teil (2c) eine im Wesentlichen konstante Breite um den Umfang der Komponente aufweist.

14. Transmukosale Komponente nach Anspruch 1, **dadurch gekennzeichnet, dass** der taillenförmige oder nach innen verengte Teil (2c) eine veränderliche Breite um den Umfang der Komponente aufweist.

15. Transmukosale Komponente nach Anspruch 1, **dadurch gekennzeichnet, dass** der untere Basisabschnitt (2d) konfiguriert ist, um gegen einen oberen Flansch (1a) des Zahnimplantats zu drücken.

## Revendications

1. Composant trans-muqueuse pour un implant dentaire destiné à supporter une restauration prothétique, ledit composant trans-muqueuse étant conçu dans le but d'améliorer la qualité et la stabilité de l'adhésion biologique de l'épithélium jonctionnel et du tissu conjonctif, dans lequel :
le composant trans-muqueuse (2) est pourvu d'une partie en de forme cintrée ou rétrécie vers l'intérieur (2c) pour réduire la hauteur nécessaire du composant trans-muqueuse (2) et pour créer un volume pour la génération d'une ceinture de stabilisation et de retenue de tissu mou,
la distance dans la direction longitudinale le long de la surface de contact de la partie de forme cintrée ou rétrécie (2c) correspond au moins à la largeur requise du tissu mou adjacent,
le composant (2) est un élément séparé, qui peut être relié à une partie d'ancrage osseux (1) de l'implant dentaire, et comprend un évidement continu pour une vis fixant le composant (2) à la partie d'ancrage osseux (1) de l'implant dentaire,
la partie de forme cintrée ou rétrécie vers l'intérieur (2c) est située entièrement sur la surface externe du composant trans-muqueuse (2) et entre une partie de base inférieure (2d) du composant trans-muqueuse (2), par l'intermédiaire de laquelle le composant est conçu pour reposer contre l'implant dentaire, et une partie rétrécie supérieure (2a) du composant trans-muqueuse (2), et
la partie de forme cintrée ou rétrécie vers l'intérieur a une profondeur moyenne de 0,2 à 1,5 mm.

2. Composant trans-muqueuse selon la revendication 1, **caractérisé en ce que** la partie de la surface externe du composant qui est destinée à coopérer avec le tissu mou a une première partie (2c') destinée à coopérer avec l'épithélium jonctionnel (4a) du tissu mou, et une seconde partie (2c") destinée à coopérer avec la partie de tissu conjonctif (4b) du tissu mou, lesdites première et seconde parties s'étendant le long de la partie de forme cintrée ou rétrécie vers l'intérieur (2c) .

3. Composant trans-muqueuse selon la revendication 2, **caractérisé en ce que** l'une ou les deux des première et seconde parties (2c', 2c") est/sont complètement ou partiellement pourvue(s) d'une couche d'oxyde, par exemple une couche d'oxyde de titane.

4. Composant trans-muqueuse selon les revendications 2 et 3, **caractérisé en ce que** l'une ou les deux des première et seconde parties (2c', 2c") est/sont pourvue(s) de rainures ou de creux (8, 9) s'étendant complètement ou partiellement autour de la périphérie du composant.

5. Composant trans-muqueuse selon les revendications 1 à 4, **caractérisé en ce que** la partie de forme cintrée ou rétrécie vers l'intérieur (2c) s'étend complètement ou partiellement autour de la périphérie du composant.

6. Composant trans-muqueuse selon les revendications 1 à 5, **caractérisé en ce que** la seconde partie (2c") destinée à coopérer avec le tissu conjonctif a une partie incurvée ou arquée avec une longueur verticale dans la plage de 1,5 à 1,9 mm, par exemple, et de préférence d'environ 1,7 mm.

7. Composant trans-muqueuse selon les revendications 1 à 6, **caractérisé en ce que**, au niveau de sa zone de section transversale la plus large, le composant a un premier diamètre (D) de 3 à 6 mm et, au niveau de sa partie de forme cintrée ou rétrécie vers l'intérieur, il a un second diamètre (d) de 2 à 5,5 mm et les valeurs inférieure, moyenne et supérieure des diamètres peuvent être réglées l'une par rapport à l'autre.

8. Composant trans-muqueuse selon les revendications 1 à 7, **caractérisé en ce que** la partie de forme cintrée ou rétrécie vers l'intérieur (2c) a une section transversale sensiblement en forme de cône au niveau de la première partie et une section verticale sensiblement semi-circulaire au niveau de la seconde partie (2c' ') .

9. Composant trans-muqueuse selon les revendications 1 à 7, **caractérisé en ce que** l'intégration entre le tissu conjonctif et la surface externe de la seconde partie et éventuellement tout ou partie de la surface de la première partie augmente en raison de la forme incurvée de la surface ou des surfaces par rapport à des formes de surface externe droites parallèles à l'axe longitudinal (7) du composant.

10. Composant trans-muqueuse selon les revendications 1 à 9, **caractérisé en ce que** la stabilité de l'implant dans l'os de la mâchoire (5a) et le tissu mou (5b) augmente en raison de l'augmentation du volume de tissu conjonctif et dans la partie de forme cintrée ou rétrécie vers l'intérieur.

11. Composant trans-muqueuse selon la revendication 1, **caractérisé en ce que** la partie de forme cintrée ou rétrécie vers l'intérieur (2c) est située dans un plan sensiblement perpendiculaire à l'axe longitudinal (7) de l'implant.

12. Composant trans-muqueuse selon la revendication 1, **caractérisé en ce que** la partie de forme cintrée ou rétrécie vers l'intérieur (2c) est située dans un plan sensiblement parallèle à la surface supérieure du tissu mou, c'est-à-dire qui suit la topographie du tissu mou.

13. Composant trans-muqueuse selon la revendication 1, **caractérisé en ce que** la partie de forme cintrée ou rétrécie vers l'intérieur (2c) a une largeur sensiblement constante autour de la périphérie du composant.

14. Composant trans-muqueuse selon la revendication 1, **caractérisé en ce que** la partie de forme cintrée ou rétrécie vers l'intérieur (2c) a une largeur variable autour de la périphérie du composant.

15. Composant trans-muqueuse selon la revendication 1, **caractérisé en ce que** la partie de base inférieure (2d) est conçue pour reposer contre une bride supérieure (1a) de l'implant dentaire.
